# EUROPÄISCHE PATENTSCHRIFT

(11) **EP 3 861 310 B1**
(45) Veröffentlichungstag und Bekanntmachung des Hinweises auf die Patenterteilung: **29.11.2023**
(21) Anmeldenummer: 19761758.2
(22) Anmeldetag: 14.08.2019
(51) Int. Cl.: G01J 9/02, G03F 7/20, H05G 2/00

(54) **METROLOGIESYSTEM UND VERFAHREN ZUR VERMESSUNG EINES ANREGUNGS-LASERSTRAHLS IN EINER EUV-PLASMAQUELLE**
METROLOGY SYSTEM AND METHOD FOR MEASURING AN EXCITATION LASER BEAM IN AN EUV PLASMA SOURCE
SYSTÈME DE MÉTROLOGIE ET PROCÉDÉ POUR MESURER UN FAISCEAU LASER D'EXCITATION DANS UNE SOURCE DE PLASMA ULTRAVIOLET EXTRÊME

(30) Priorität: 02.10.2018 DE 102018124396
(43) Veröffentlichungstag der Anmeldung: 11.08.2021
(73) Patentinhaber: Carl Zeiss SMT GmbH, 73447 Oberkochen (DE)
(72) Erfinder: MANGER, Matthias, 73432 Aalen (DE); BAUMER, Florian, 73447 Oberkochen (DE)
(74) Vertreter: Frank, Hartmut
(86) Internationale Anmeldenummer: PCT/EP2019/071801
(87) Internationale Veröffentlichungsnummer: WO 2020/069792

(56) Entgegenhaltungen:
- DE-A1-102012 212 354
- DE-A1-102014 208 792
- DE-A1-102015 226 571
- US-A1- 2013 119 232

## Beschreibung

Die vorliegende Anmeldung beansprucht die Priorität der Deutschen Patentanmeldung DE 10 2018 124 396.0, angemeldet am 2. Oktober 2018.

### HINTERGRUND DER ERFINDUNG

### Gebiet der Erfindung

Die Erfindung betrifft ein Metrologiesystem und ein Verfahren zur Vermessung eines Anregungs-Laserstrahls in einer EUV-Plasmaquelle.

### Stand der Technik

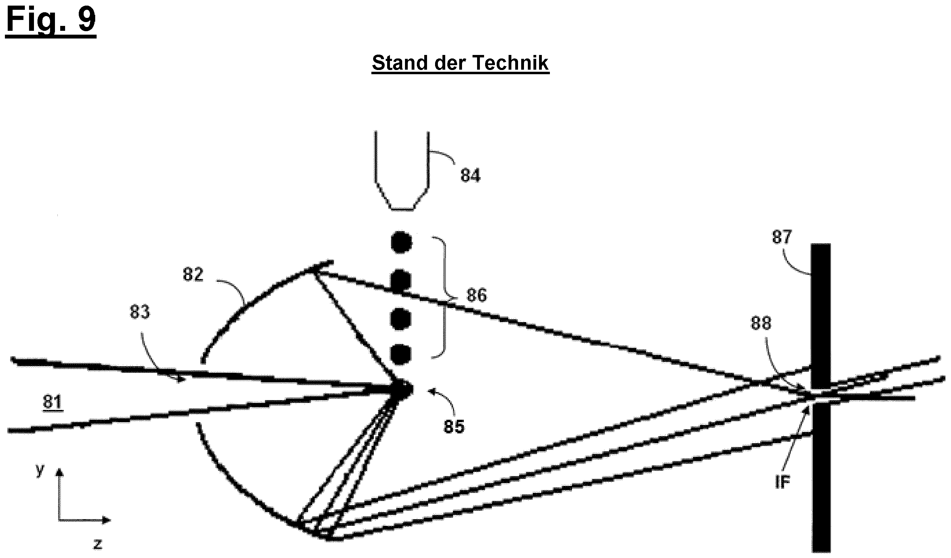

Laserplasmaquellen werden z.B. zur Anwendung in der Lithographie eingesetzt. So erfolgt etwa im Betrieb einer für den EUV-Bereich (z.B. bei Wellenlängen von z.B. etwa 13 nm oder etwa 7 nm) ausgelegten Projektionsbelichtungsanlage die Erzeugung des benötigten EUV-Lichtes mittels einer auf einer Plasma-Anregung basierenden EUV-Lichtquelle, zu der Fig. 9 einen beispielhaften herkömmlichen Aufbau zeigt.

Diese EUV-Lichtquelle weist einen (nicht gezeigten) Hochenergielaser z.B. zur Erzeugung von Infrarotstrahlung 81 (z.B. CO₂-Laser mit einer Wellenlänge von λ≈ 10.6µm) auf, welche über eine Fokussieroptik fokussiert wird, durch eine in einem als Ellipsoid ausgebildeten Kollektorspiegel 82 vorhandene Öffnung 83 hindurchtritt und als Anregungsstrahl auf ein mittels einer Targetquelle 84 erzeugtes und einer Plasmazündungsposition 85 zugeführtes Targetmaterial 86 (z.B. Zinntröpfchen) gelenkt wird. Die Infrarotstrahlung 81 heizt das in der Plasmazündungsposition 85 befindliche Targetmaterial 86 derart auf, dass dieses in einen Plasmazustand übergeht und EUV-Strahlung abgibt. Diese EUV-Strahlung wird über den Kollektorspiegel 82 auf einen Zwischenfokus IF (= "Intermediate Focus") fokussiert und tritt durch diesen in eine nachfolgende Beleuchtungseinrichtung, deren Umrandung 87 lediglich angedeutet ist und die für den Lichteintritt eine freie Öffnung 88 aufweist, ein. Von wesentlicher Bedeutung für die in einer EUV-Plasmaquelle erzielbare Dosisstabilität bzw. zeitliche Stabilität der EUV-Abstrahlcharakteristik und die realisierbare EUV-Lichtausbeute ist dabei, dass die mit zunehmendem Lichtbedarf sehr schnell (z.B. mit einer Injektionsrate im Bereich von 100kHz bzw. in einem zeitlichen Abstand von z.B. 10µs) in die Laserplasmaquelle "einfliegenden" Zinntröpfchen individuell hochgenau (z.B. mit einer Genauigkeit unterhalb von 1µm) und reproduzierbar von dem das Tröpfchen zerstäubenden Laserstrahl getroffen werden. Dies erfordert im o.g. Aufbau wiederum eine hochgenaue Einstellung der Tröpfchenposition sowie eine hochgenaue Nachführung der z.B. vom CO₂-Laser erzeugten Infrarotstrahlung.

Zur Steigerung der EUV-Konversionseffizienz kann die Überführung des Targetmaterials ins Plasma in zwei Schritten erfolgen. Hierbei wird über einen Vorkonditionierungs-Laserstrahl mit einer ersten Wellenlänge (von z.B. etwa 10.3µm) das jeweilige Target-Tröpfchen zunächst geeignet konditioniert, um dann bei hoher EUV-Konversionseffizienz mit dem sogenannten Hauptpuls des Anregungs-Laserstrahls einer zweiten Wellenlänge (von z.B. etwa 10.6µm) vollständig ins Plasma überführt zu werden. Aufgrund des zweistufigen Prozesses der Überführung ins Plasma sind dann zwei Laserstrahlen und deren Rückstreustrahlung vom Target messtechnisch zu erfassen, um die geometrischen Beziehungen von Strahl zu Strahl bzw. Strahl zu Target zu kontrollieren.

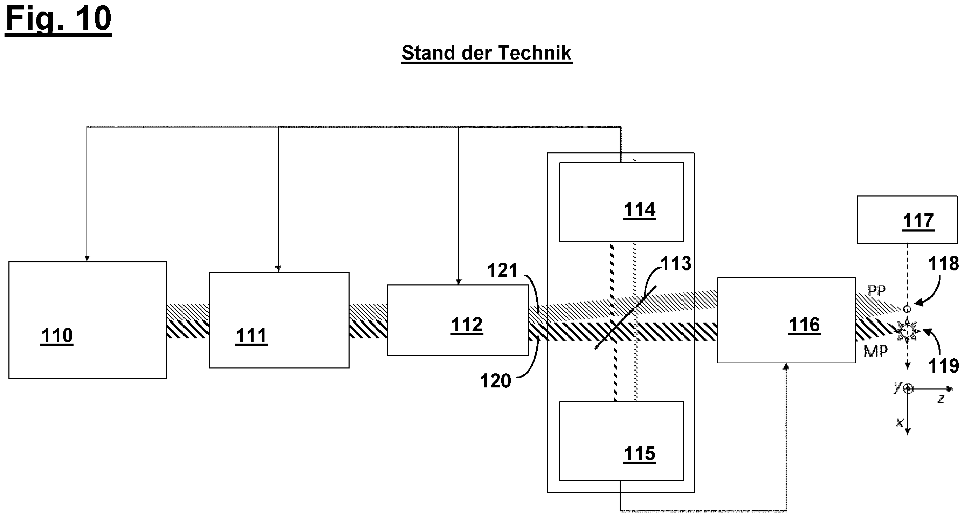

Fig. 10 zeigt eine schematische Darstellung einer entsprechenden herkömmlichen Anordnung zur Strahlkontrolle in einer EUV-Plasmaquelle. Die Analyse des Anregungs-Laserstrahls bzw. eines daraus ausgekoppelten Messstrahls sowohl in "Vorwärtsrichtung" (d.h. vor dem Auftreffen auf das jeweilige Target-Tröpfchen) als auch in "Rückwärtsrichtung" (d.h. nach Reflexion an dem jeweiligen Target-Tröpfchen) erlaubt hierbei eine Aussage über die relative Einstellung von Anregungs-Laserstrahl bzw. Vorkonditionierungs-Laserstrahl und Target-Tröpfchen zueinander.

Gemäß Fig. 10 wird der von einem CO₂-Laser 110 erzeugte Laserstrahl über eine Strahlsteuereinheit 111, eine Pulstrennungseinheit 112, einen Strahlteiler 113 und eine Fokussieroptik 116 dem aus einer Targetquelle 114 zugeführten Targetmaterial zugeführt. In der wellenselektiven Pulstrennungseinheit 112 werden Anregungs-Laserstrahl 120 und Vorkonditionierungs-Laserstrahl 121 voneinander separiert, wobei der Vorkonditionierungs-Laserstrahl 121 auf ein noch nicht konditioniertes Target-Tröpfchen 118 und der Anregungs-Laserstrahl 120 auf ein entsprechend konditioniertes Target-Tröpfchen 119 fokussiert wird. An dem jeweiligen Target-Tröpfchen wird jeweils ein Teil des Anregungs-Laserstrahls 120 und ein Teil des Vorkonditionierungs-Laserstrahls 121 zurückreflektiert und gelangt über die Fokussieroptik 116 kollimiert zurück zum Strahlteiler 113. Vom Strahlteiler 113 werden sowohl aus dem Anregungs-Laserstrahl 120 als auch aus dem Vorkonditionierungs-Laserstrahl 121 jeweils Messstrahlen sowohl "in Vorwärtsrichtung" (d.h. vor dem Auftreffen des Anregungs-Laserstrahls auf das Targetmaterial) als auch "in Rückwärtsrichtung" (d.h. nach Reflexion an dem Targetmaterial) ausgekoppelt. Die ausgekoppelten Messstrahlen gelangen jeweils in ein Strahlanalysesystem 114 bzw. 115, welche gemäß Fig. 10 entsprechend den gemessenen Strahleigenschaften Steuersignale zur aktiven Strahlkontrolle an den CO₂-Laser 110, die Strahlsteuereinheit 111 und die Pulstrennungseinheit 112 senden. Des Weiteren sendet das Strahlanalysesystem 115 ein Steuersignal zur Fokuskontrolle an die Fokussieroptik 116.

Zum Stand der Technik wird beispielhaft auf DE102012212354, DE102014208792, US20130119232 und DE102015226571 verwiesen.

### ZUSAMMENFASSUNG DER ERFINDUNG

Aufgabe der vorliegenden Erfindung ist es, ein Metrologiesystem und ein Verfahren zur Vermessung eines Anregungs-Laserstrahls in einer EUV-Plasmaquelle bereitzustellen, welche eine möglichst exakte und umfassende Lichtstrahlanalyse ermöglichen.

Diese Aufgabe wird gemäß den Merkmalen der unabhängigen Patentansprüche gelöst.

Ein erfindungsgemäßes Metrologiesystem zur Vermessung eines Anregungs-Laserstrahls in einer EUV-Plasmaquelle, wobei der Anregungs-Laserstrahl in der EUV-Plasmaquelle von einem Anregungs-Laser über eine Strahlsteuereinheit und eine Fokussieroptik auf ein in einer Plasmazündungsposition befindliches Targetmaterial geführt wird, weist auf:
- ein erstes Strahlanalysesystem zur Analyse wenigstens eines aus dem Anregungs-Laserstrahl vor Reflexion an dem Targetmaterial ausgekoppelten ersten Messstrahls;
- ein zweites Strahlanalysesystem zur Analyse wenigstens eines aus dem Anregungs-Laserstrahl nach Reflexion an dem Targetmaterial ausgekoppelten zweiten Messstrahls;
- wobei sowohl das erste Strahlanalysesystem als auch das zweite Strahlanalysesystem jeweils wenigstens eine Wellenfrontsensorik aufweisen.

Der Erfindung liegt insbesondere das Konzept zugrunde, in einer EUV-Plasmaquelle die zur Strahlsteuerung benötigte Information über die Strahlparameter des Anregungs-Laserstrahls sowohl in Vorwärtsrichtung (d.h. vor dem Auftreffen auf das jeweilige Target-Tröpfchen) als auch in Rückwärtsrichtung (d.h. nach Reflexion an dem jeweiligen Target-Tröpfchen) auf Basis einer Wellenfrontvermessung zu gewinnen. Insbesondere liegt der Erfindung die Überlegung zugrunde, dass bei der jeweils über eine Teleskop-Anordnung erfolgenden (verkleinernden) Abbildung des ausgekoppelten Messstrahls in ein Strahlanalysesystem die vollständige Rekonstruktion der (objektseitigen) Strahleigenschaften mit einer Wellenfrontsensorik, welche die Strahleigenschaften in einer durch die Teleskop-Anordnung bereitgestellten bildseitigen Nahfeldebene erfasst, sowie einem zusätzlich aufgenommenen Nahfeldbild gewonnen werden kann.

Als "Nahfeld" wird hier und im Folgenden die Amplituden-/Intensitätsverteilung in einer Schnittebene senkrecht zur Ausbreitungsrichtung im Regime des kollimierten (aufgeweiteten = nahezu divergenzfreien) Strahls bezeichnet. Das Fernfeld hingegen entspricht der Amplituden-/Intensitätsverteilung in einer taillen- bzw. fokusnahen Ebene senkrecht zur Strahlausbreitung im Regime des fokussierten bzw. konvergenten Strahls. Die Erzeugung eines fokussierten Strahls aus dem kollimierten Strahl und umgekehrt erfolgt üblicherweise über Fourier-Optiken. Die Begriffe "Nahfeldebene" und "Fernfeldebene" bezeichnen somit zueinander Fourier-konjugierte Ebenen und werden analog zu den Begriffen "Pupillenebene" bzw. "Feldebene" eines abbildenden optischen Systems verwendet.

Dabei beinhaltet die Erfindung auch das weitere Konzept, die betreffenden Strahlanalysesysteme zur Analyse des aus dem Anregungs-Laserstrahl vor bzw. nach Reflexion an dem Targetmaterial ausgekoppelten Messstrahls zusätzlich auch zur Analyse eines Vorkonditionierungs-Laserstrahls auszulegen, welcher wie bereits eingangs erläutert zur Steigerung der EUV-Konversionseffizienz bei der Überführung ins Plasma mit dem eigentlichen Hauptpuls dazu dient, das jeweilige Target-Tröpfchen zunächst geeignet zu konditionieren. Bei den erfindungsgemäßen Strahlanalysesystemen kann somit allein auf Basis der erfindungsgemäß eingesetzten Wellenfrontsensorik eine vollständige messtechnische Erfassung der bei dem zweistufigen Prozess zur effizienten Zündung des Plasmas eingesetzten Laserstrahlen (Anregungs-Laserstrahl und Vorkonditionierungs-Laserstrahl) sowie der zugehörigen Reflexionsstrahlung vom Target realisiert werden.

Hierbei können in vorteilhaften Ausgestaltungen der Erfindung die beiden zur Analyse der vorstehend genannten Laserstrahlen in Vorwärtsrichtung bzw. in Rückwärtsrichtung eingesetzten Strahlanalysesysteme von gleicher Bauart sein, wodurch der erforderliche Aufwand sowohl in fertigungstechnischer Hinsicht als auch hinsichtlich der Auswertung der jeweiligen Messergebnisse auf vorteilhafte Weise minimiert werden kann.

Dabei können grundsätzlich hinsichtlich der Bauart der Wellenfrontsensorik bzw. dem der Wellenfrontmessung zugrundeliegenden Messprinzip drei Bauarten bzw. Kategorien unterschieden werden:
Bei der "fremdreferenzierten interferometrischen Wellenfrontvermessung" erfolgt die Wellenfrontvermessung durch Vergleich der zu vermessenden Wellenfront mit einer (typischerweise sphärischen oder ebenen) Referenzwelle, wobei als Beispiel das bekannte Punktbeugungsinterferometer angeführt werden kann. Bei der "selbstreferenzierten interferometrischen Wellenfrontvermessung" erfolgt die Wellenfrontvermessung durch Überlagerung der zu vermessenden Wellenfront mit einer durch Replikation erzeugten Wellenfront, wobei als Beispiel das Gitter-Scherungs-Interferometer genannt werden kann. Eine dritte Kategorie bildet die Wellenfrontvermessung durch Messung der lokalen Wellenfrontneigung, wobei (z.B. unter Verwendung von Shack-Hartmann-Sensoren) die lokale Wellenfrontverkrümmung an Positionen gemessen wird, welche durch im Vergleich zur Strahlgröße kleine Subaperturen definiert sind.

In Ausführungsformen der Erfindung (jedoch ohne dass die Erfindung hierauf beschränkt wäre) weist die Wellenfrontsensorik der in Vorwärtsrichtung bzw. in Rückwärtsrichtung eingesetzten Strahlanalysesysteme jeweils ein Gitter-Scherungs-Interferometer auf. Bei diesem Gitter-Scherungs-Interferometer kann es sich insbesondere um ein Fernfeld-Gitter-Scherungs-Interferometer handeln. Diese im Weiteren noch detaillierter beschriebene Ausgestaltung hat u.a. zur Folge, dass das zur Scherung bzw. Erzeugung der jeweiligen Scher-Interferogramme verwendete Beugungsgitter vergleichsweise grob (mit Gitterkonstanten von größenordnungsmäßig 1mm bei Wellenlängen im Bereich von 10µm) ausgestaltet werden kann. Des Weiteren kann bei dieser Ausgestaltung die Erzeugung einer als Modulationsträger wirkenden Wellenfrontkrümmung durch Verstimmung eines Kepler-Teleskops, innerhalb dessen das betreffende Beugungsgitter angeordnet ist, erreicht werden.

In weiteren Ausführungsformen der Erfindung kann es sich bei dem in den Strahlanalysesystemen in Vorwärts- bzw. Rückwärtsrichtung eingesetzten Gitter-Scherungs-Interferometern auch um Nahfeld-Gitter-Scherungs-Interferometer handeln. Bei dieser Ausgestaltung kann wie im Weiteren noch erläutert typischerweise eine Reduzierung der erforderlichen Baugrößen infolge geringerer erforderlicher Linsendurchmesser innerhalb der jeweiligen Optiken (einschließlich Strahlreplikationseinheiten) erreicht werden.

Gemäß einer Ausführungsform weist das Gitter-Scherungs-Interferometer jeweils eine ein erstes Beugungsgitter aufweisende Strahlreplikationseinheit und ein als Schergitter wirkendes zweites Beugungsgitter auf.

Gemäß einer Ausführungsform ist das zweite Beugungsgitter zur Erzeugung von Scher-Interferogrammen in zueinander senkrechten Richtungen auf einem nachfolgenden Detektor ausgebildet.

Gemäß einer Ausführungsform weist das zweite Beugungsgitter ferner einen transparenten Bereich zur Erzeugung eines Nahfeldbildes auf einem nachfolgenden Detektor auf.

Gemäß der Erfindung wird zusätzlich zu dem Anregungs-Laserstrahl ein Vorkonditionierungs-Laserstrahl auf das Targetmaterial vor dem Erreichen der Plasmazündungsposition geführt, wobei das erste Strahlanalysesystem und das zweite Strahlanalysesystem ferner zur Analyse dieses Vorkonditionierungs-Laserstrahls ausgelegt sind.

Gemäß der Erfindung weisen die Wellenfrontsensorik des ersten Strahlanalysesystems und die Wellenfrontsensorik des zweiten Strahlanalysesystems jeweils eine Strahlreplikationseinheit mit nachgeschalteten Wellenlängenfiltern zur Separierung des Anregungs-Laserstrahls und des Vorkonditionierungs-Laserstrahls voneinander auf.

Gemäß einer Ausführungsform weisen die Wellenfrontsensorik des ersten Strahlanalysesystems und die Wellenfrontsensorik des zweiten Strahlanalysesystems jeweils einen einzigen Detektor zur Erfassung sowohl des Anregungs-Laserstrahls als auch des Vorkonditionierungs-Laserstrahls auf. Insbesondere können sowohl für den Anregungs-Laserstrahl als auch für den Vorkonditionierungs-Laserstrahl die jeweils in zueinander senkrechten Richtungen aufgenommenen Scher-Interferogramme ebenso wie ein jeweils aufgenommenes Nahfeldbild auf ein- und demselben Detektor bzw. Bildsensor erfasst werden, so dass mit einem Einsatz unterschiedlicher optischer Komponenten in der jeweiligen Strahlführung einhergehende Mess- bzw. Auswertungsfehler vermieden werden.

Gemäß einer Ausführungsform besitzt der Anregungs-Laserstrahl eine Wellenlänge im Infrarotbereich.

Die Erfindung betrifft weiter auch ein Verfahren zur Vermessung eines Anregungs-Laserstrahls in einer EUV-Plasmaquelle, nach den Merkmalen von Anspruch 11.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

### KURZE BESCHREIBUNG DER ZEICHNUNGEN

Es zeigen:
- Figur 1: eine schematische Darstellung zur Erläuterung des prinzipiellen Gesamtaufbaus der Strahlanalyse sowohl für einen "in Vorwärtsrichtung" (d.h. vor dem Auftreffen des AnregungsLaserstrahls auf das Targetmaterial) als auch für einen "in Rückwärtsrichtung" (d.h. nach Reflexion an dem Targetmaterial) ausgekoppelten Messstrahl innerhalb eines erfindungsgemäßen Metrologiesystems;
- Figur 2: eine schematische Darstellung des prinzipiellen Aufbaus eines zur Analyse sowohl eines Anregungs-Laserstrahls als auch eines Vorkonditionierungs-Laserstrahls ausgelegten Strahlanalysesystems innerhalb des Gesamtaufbaus der Strahlanalyse von Figur 1 ;
- Figur 3: eine schematische Darstellung eines erfindungsgemäß erzeugten Detektorbildes, welches jeweils ScherInterferogramme in zueinander senkrechten Richtungen sowie ein Nahfeldbild sowohl für den Anregungs-Laserstrahl als auch den Vorkonditionierungs-Laserstrahl aufweist;
- Figur 4-6: schematische Darstellungen zur Erläuterung von Aufbau und Funktionsweise eines in einem erfindungsgemäßen Strahlanalysesystem eingesetzten Gitter-Scherungs-Interferometers in Form eines Fernfeld-Gitter-Scherungs-Interferometers;
- Figur 7-8: schematische Darstellungen zur Erläuterung von Aufbau und Funktionsweise eines in einem erfindungsgemäßen Strahlanalysesystem eingesetzten Gitter-Scherungs-Interferometers in Form eines Nahfeld-Gitter-Scherungs-Interferometers;
- Figur 9: eine schematische Darstellung des prinzipiellen Aufbaus einer EUV-Lichtquelle gemäß dem Stand der Technik; und
- Figur 10: eine schematische Darstellung einer herkömmlichen Anordnung zur Strahlkontrolle in einer EUV-Plasmaquelle.

### DETAILLIERTE BESCHREIBUNG BEVORZUGTER AUSFÜHRUNGSFORMEN

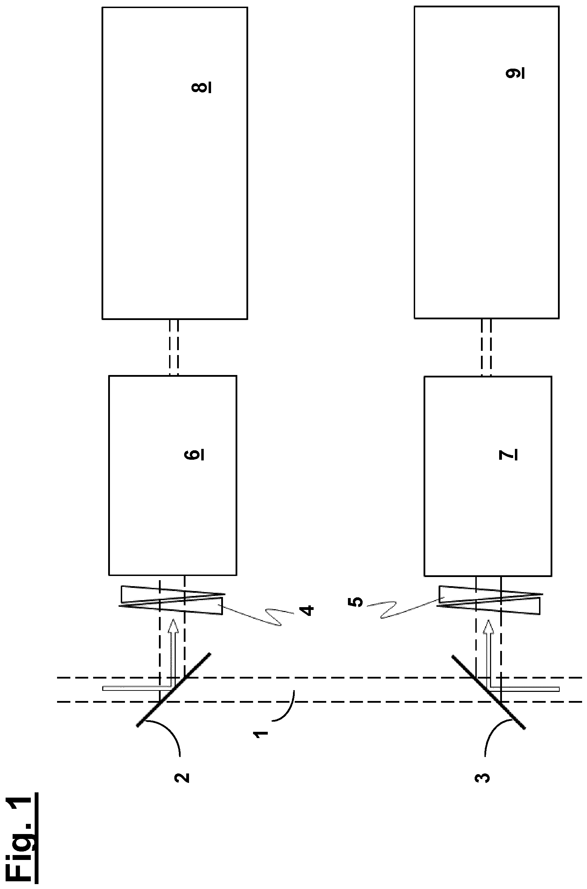

Im Folgenden wird zunächst unter Bezugnahme auf Fig. 1 ein prinzipieller Gesamtaufbau der erfindungsgemäßen Strahlanalyse erläutert. Dabei erfolgt ausgehend vom bereits anhand von Fig. 9-10 beschriebenen grundsätzlichen Aufbau einer EUV-Plasmaquelle bzw. eines Metrologiesystems die Analyse für jeweils einen aus dem Anregungs-Laserstrahl ausgekoppelten Messstrahl sowohl für den in "Vorwärtsrichtung" (d.h. vor dem Auftreffen des Anregungs-Laserstrahls auf das Targetmaterial) als auch für den in "Rückwärtsrichtung" (d.h. nach Reflexion an dem Targetmaterial) ausgekoppelten Messstrahl.

Gemäß Fig. 1 wird aus dem eigentlichen Anregungs-Laserstrahl 1 (welcher zwischen einem in Fig. 1 oben befindlichen, nicht eingezeichneten CO₂-Laser und einem links unten befindlichen, ebenfalls nicht eingezeichneten Targetmaterial verläuft), in der lediglich beispielhaft dargestellten Konfiguration an Strahlteilern 2 und 3 jeweils ein Messstrahl in Vorwärtsrichtung und in Rückwärtsrichtung ausgekoppelt. Der in Vorwärtsrichtung ausgekoppelte Messstrahl trifft über einen (ein Paar von unabhängig voneinander drehbaren Keilprismen umfassenden) Strahlmanipulator 4 auf eine Teleskop-Anordnung 6 zur verkleinernden Abbildung auf ein erstes Strahlanalysesystem 8.

In analoger Weise und in gleicher Bauart hierzu trifft der in Rückwärtsrichtung ausgekoppelte Messstrahl über einen (ebenfalls ein Paar von unabhängig voneinander drehbaren Keilprismen umfassenden) Strahlmanipulator 5 auf eine Teleskop-Anordnung 7 zur verkleinernden Abbildung auf ein zweites Strahlanalysesystem 9.

Die Strahlanalysesysteme 8 und 9 weisen jeweils eine Wellenfrontsensorik auf, wobei diese Wellenfrontsensoriken vorzugsweise von gleicher Bauart sind (z.B. beide wie im Weiteren beschrieben ein Gitter-Scherungs-Interferometer aufweisen können).

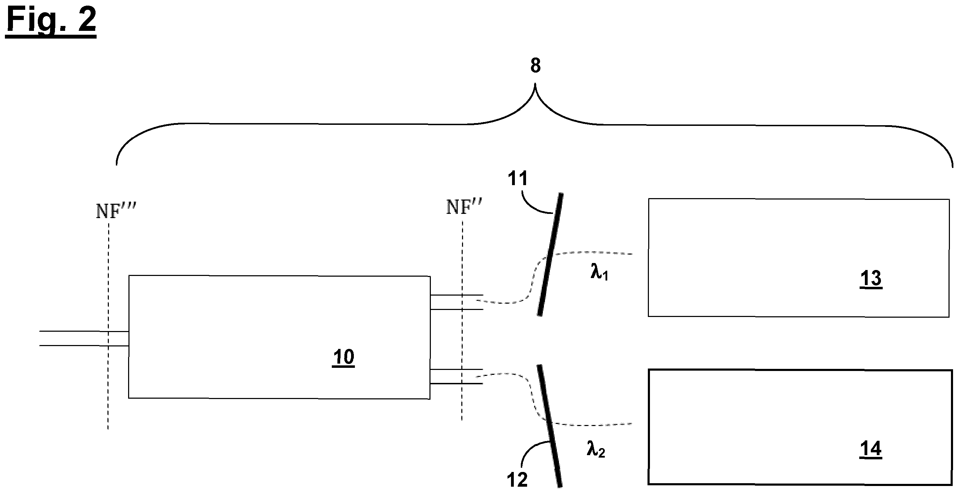

Fig. 2 zeigt in schematischer Darstellung den prinzipiellen möglichen Aufbau des Strahlanalysesystems 8 aus Fig. 1. Dabei sind im Weiteren Nahfeldebenen jeweils mit NF, NF`, NF"... und Fernfeldebenen jeweils mit FF, FF`, FF"... bezeichnet. Mit f, *f*' sind Brennweiten bezeichnet. Das Strahlanalysesystem 8 umfasst zunächst eine Strahlreplikationseinheit 10 (z.B. in Form eines Strahlreplikations-Teleskops) mit nachgeschalteten Wellenlängenfiltern 11, 12, worüber der Anregungs-Laserstrahl (mit einer Wellenlänge λ₁, welche beispielsweise 10.6µm betragen kann) und der Vorkonditionierungs-Laserstrahl (mit einer Wellenlänge λ₂, welche beispielsweise 10.3µm betragen kann) bzw. die zugehörigen ausgekoppelten Messstrahlen auf separaten Strahlwegen jeweils einem Gitter-Scherungs-Interferometer, welches in Fig. 2 lediglich als Block 13 bzw. 14 dargestellt ist und im Weiteren anhand unterschiedlicher Ausführungen noch näher beschrieben wird, zugeführt werden.

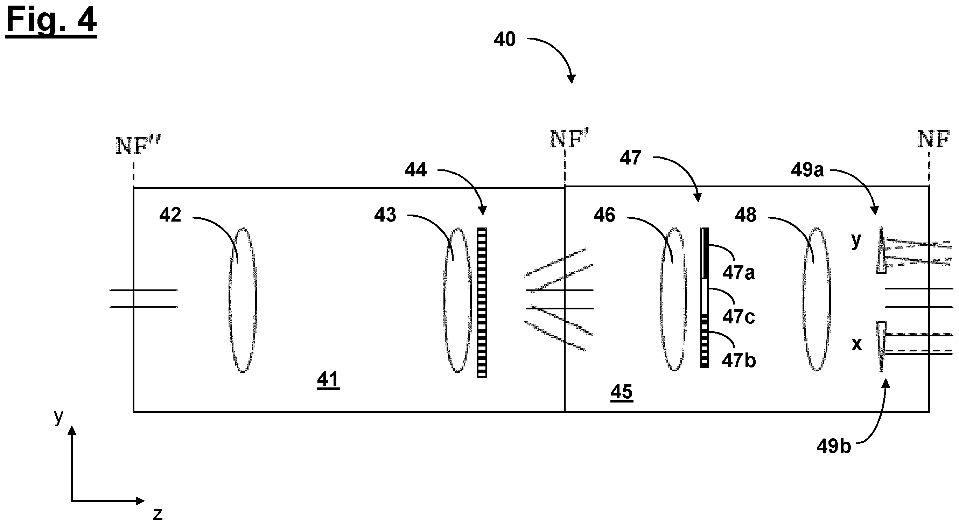

Fig. 4 zeigt eine mögliche Ausgestaltung des in den Strahlanalysesystemen 8 bzw. 9 beispielhaft eingesetzten Gitter-Scherungs-Interferometers als Fernfeld-Gitter-Scherungs-Interferometer 40. Dieses weist zunächst eine Strahlreplikationseinheit 41 mit Linsen 42, 43 und einem ersten Beugungsgitter 44 auf, welches den eintreffenden Strahl in drei replizierte Teilstrahlen entsprechend der -1.-ten, 0.-ten und +1.-Beugungsordnung aufteilt. Diese drei Teilstrahlen treffen auf eine als Kepler-Teleskop ausgebildete optische Gruppe 45, welche zwischen Fourier-Optiken 46 und 48 insbesondere ein zweites Beugungsgitter 47 umfasst. Dieses zweite Beugungsgitter 47 weist entsprechend den drei Teilstrahlen drei separate Bereiche 47a-47c auf. Hiervon erzeugen die Bereiche 47a und 47b in einer nachfolgenden Nahfeldebene NF Scher-Interferogramme in zueinander senkrechten Richtungen, während der Bereich 47c als transparenter Bereich ein Nahfeldbild in der Nahfeldebene NF liefert. Diese Ausgestaltung ist messtechnisch vorteilhaft, da die Strahlinformation in einer Form vorliegt, die eine fehlerarme Rekonstruktion der Wellenfront und der Strahlamplitude ermöglicht. Jedoch ist auch eine Ausführung als 2D-Scherinterferometer ohne explizite Abbildung des Nahfeldes denkbar, wobei in diesem Falle die Strahlreplikationseinheit 41 obsolet wird.

Mit "49a" und 49b" sind keilförmige Prismen zur Bereitstellung eines senkrechten Lichteinfalls für die nominalen Hauptstrahlen auf einen in der Nahfeldebene NF befindlichen Bildsensor bezeichnet.

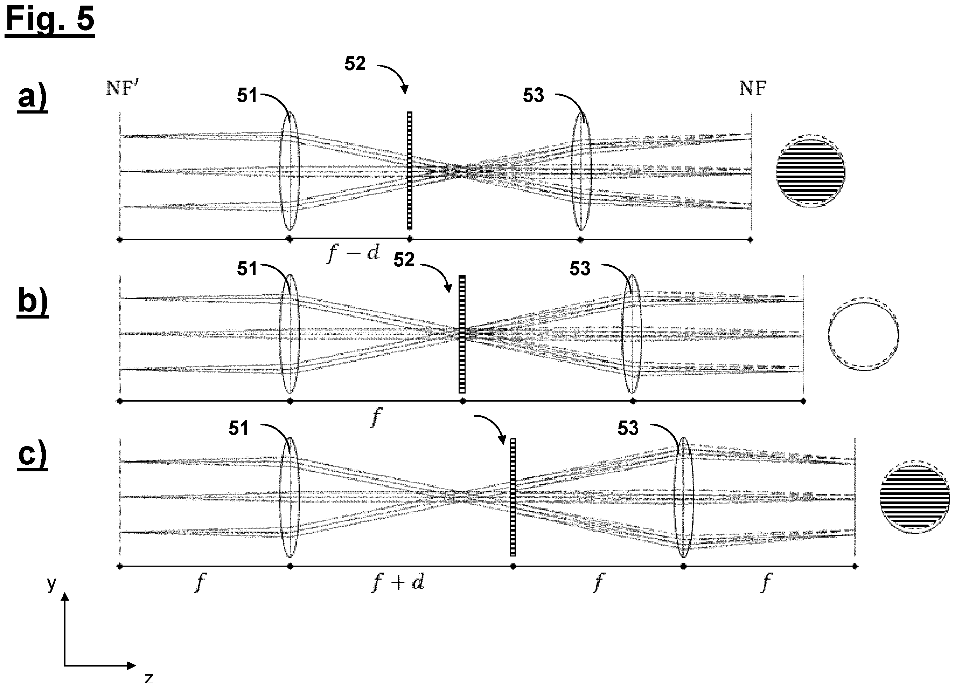

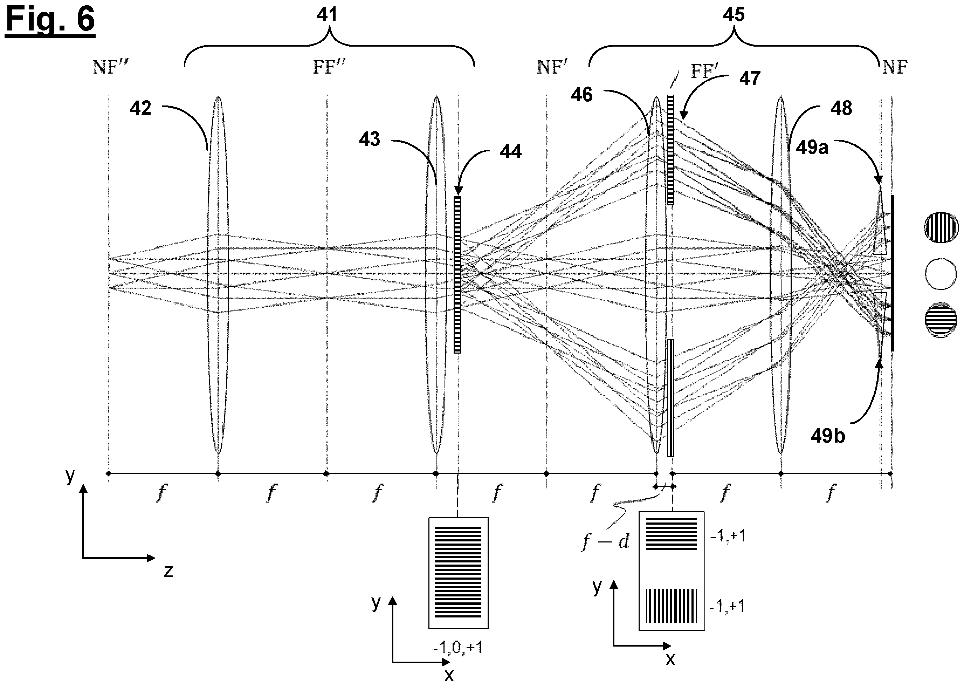

Wie in Fig. 5a-5c schematisch angedeutet, erfolgt die Bereitstellung eines erforderlichen räumlichen Modulationsträgers zur Erzeugung der Scher-Interferogramme bzw. eines auswertbaren Linienmusters durch Verstimmung des durch die Fourier-Optiken gebildeten Kepler-Teleskops (wobei diese Fourier-Optiken in Fig. 5a-5c mit "51" und "53" bezeichnet sind und den Fourier-Optiken 46 und 48 aus Fig. 4 entsprechen). In Fig. 5a-5c, in welchen lediglich ein optischer Kanal betrachtet ist, erfolgt dies im Wege einer Verschiebung der Fourier-Optiken 51, 53 mit Brennweite relativ zueinander um die Distanz d. Gemäß Fig. 6 ist entsprechend diesem Prinzip die als Kepler-Teleskop ausgebildete optische Gruppe 45 unter Platzierung des zweiten Beugungsgitter 47 unmittelbar nach der eintrittsseitigen Fourier-Optik 46 maximal verstimmt mit der Folge, dass eine maximale Separierung der jeweiligen Lichtröhren und damit ein maximaler Messbereich in Bezug auf Strahldivergenz und Strahlausbreitungsrichtung erreicht wird.

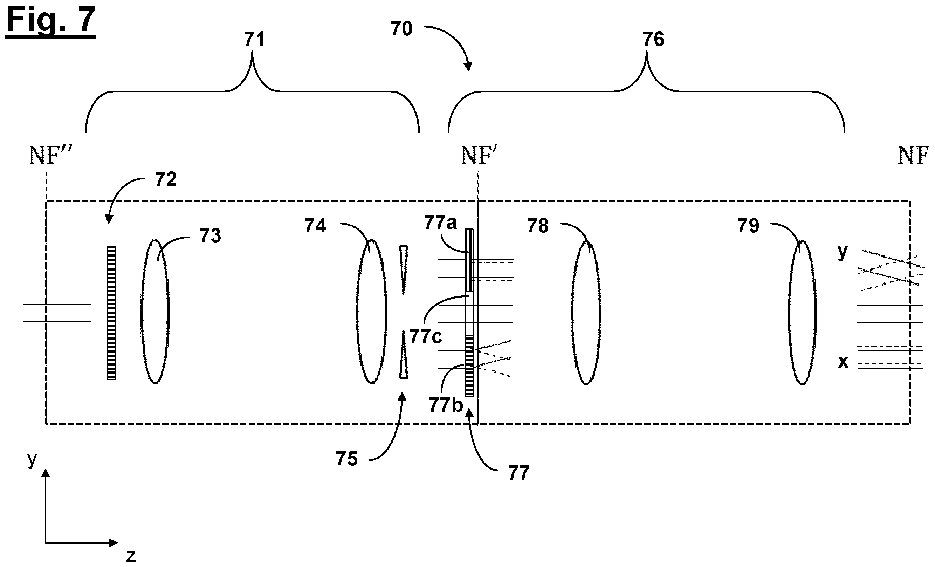

Fig. 7-8 zeigen schematische Darstellungen zur Erläuterung einer weiteren möglichen Ausführung des innerhalb der Strahlanalysesysteme 8 und 9 beispielhaft einsetzbaren Gitter-Scherungs-Interferometers in Form eines Nahfeld-Gitter-Scherungs-Interferometers.

Dieses Nahfeld-Gitter-Scherungs-Interferometer 70 weist zunächst wiederum eine ein erstes Beugungsgitter 72 aufweisende Strahlreplikationseinheit 71 auf, über welche der eintreffende Strahl analog zu der vorstehend anhand von Fig. 4-6 beschriebenen Ausführungsform entsprechend der -1.-ten, 0.-ten und +1.ten Beugungsordnung in drei replizierte Teilstrahlen aufgeteilt wird.

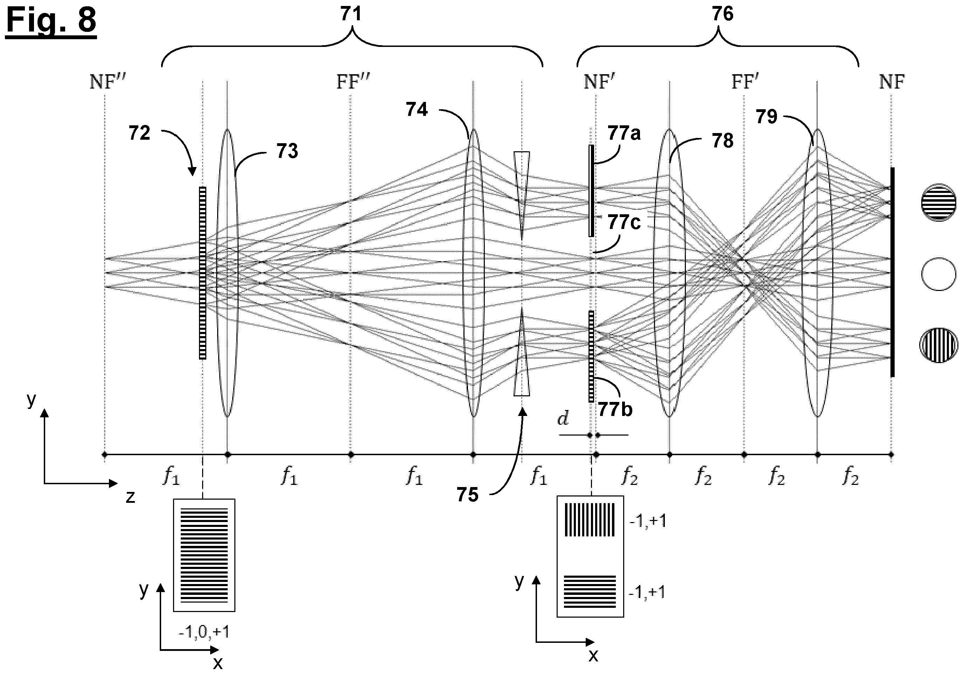

Auf das Beugungsgitter 72 folgt ein aus Fourier-Optiken 73, 74 gebildetes Replikations-Teleskop, von welchem die entsprechenden Teilstrahlen über keilförmige Prismen 75 senkrecht auf ein als Schergitter wirkendes zweites Beugungsgitter 77 in einer nachfolgenden optischen Gruppe 76 treffen. Dieses zweite Beugungsgitter 77 weist analog zu den vorstehend anhand von Fig. 4-6 beschriebenen Ausführungsformen drei separate Bereiche 77a-77c auf, wobei die Bereiche 77a, 77b zur Erzeugung von Scher-Interferogrammen in zueinander senkrechten Richtungen dienen und wobei der Bereich 77c als transparenter Bereich zur Bereitstellung eines Nahfeldbildes auf einem nachfolgenden Bildsensor dient. Über ein nachgeschaltetes 1:1-Kepler-Teleskop aus Fourier-Optiken 78, 79 wird die das zweite Beugungsgitter 77 aufweisende Nahfeldebene NF' auf eine bildseitige Nahfeldeben NF, in welcher der Bildsensor platziert ist, abgebildet. *f₁* bezeichnet in Fig. 8 die Brennweiten innerhalb der Strahlreplikationseinheit 71, und *f₂* bezeichnet die Brennweiten innerhalb des nachgeschalteten 1: 1-Kepler-Teleskops.

In weiteren Ausführungsformen kann das Teleskop auch entfallen, wobei der Kamerasensor in einem einer ausgewählten Talbot-Ordnung entsprechenden Abstand hinter dem Schergitter in einer Nahfeldebene angeordnet werden kann. Der Einsatz eines Teleskops ist jedoch vorteilhaft, da die Realisierung eines so geringen Abstands zwischen Bildsensor und Schergitter bauartbedingt ggf. nicht möglich ist. Auch hier ist ebenfalls eine Ausführung des zweiten Beugungsgitters 77 als 2D-Scherinterferometer ohne explizite Abbildung des Nahfeldes denkbar, wobei in diesem Falle die Strahlreplikationseinheit 71 obsolet wird.

Bei der vorstehend beschriebenen Ausgestaltung als Nahfeld-Gitter-Scherungs-Interferometer kann wie im Weiteren noch erläutert typischerweise eine Reduzierung der erforderlichen Baugrößen infolge geringerer erforderlicher Linsendurchmesser innerhalb der jeweiligen Optiken (einschließlich Strahlreplikationseinheiten) erreicht werden.

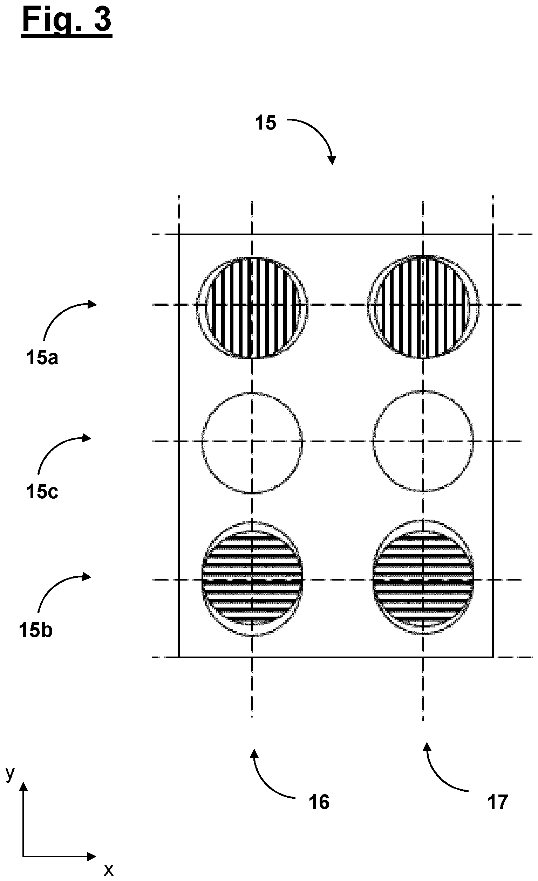

Im Ergebnis können bei der erfindungsgemäßen Strahlanalyse sowohl für den Anregungs-Laserstrahl als auch für den Vorkonditionierungs-Laserstrahl die jeweils in zueinander senkrechten Richtungen wie vorstehend beschrieben aufgenommenen Scher-Interferogramme ebenso wie das jeweils aufgenommene Nahfeldbild auf ein- und demselben Detektor 15 bzw. Bildsensor erfasst werden, so dass mit einem Einsatz unterschiedlicher optischer Komponenten in der jeweiligen Strahlführung einhergehende Mess- bzw. Auswertungsfehler vermieden werden. Fig. 3 zeigt schematisch ein solches Detektorbild, welches jeweils Scher-Interferogramme 15a, 15b in zueinander senkrechten Richtungen sowie jeweils ein Nahfeldbild 15c sowohl für den Anregungs-Laserstrahl (Spalte 16) als auch den Vorkonditionierungs-Laserstrahl (Spalte 17) aufweist.

Wenn die Erfindung auch anhand spezieller Ausführungsformen beschrieben wurde, erschließen sich für den Fachmann zahlreiche Variationen und alternative Ausführungsformen, z.B. durch Kombination und/oder Austausch von Merkmalen einzelner Ausführungsformen. Dementsprechend versteht es sich für den Fachmann, dass derartige Variationen und alternative Ausführungsformen von der vorliegenden Erfindung mit umfasst sind, und die Reichweite der Erfindung nur im Sinne der beigefügten Patentansprüche beschränkt ist.

## Patentansprüche

1. Metrologiesystem zur Vermessung eines Anregungs-Laserstrahls in einer EUV-Plasmaquelle, wobei der Anregungs-Laserstrahl in der EUV-Plasmaquelle von einem Anregungs-Laser über eine Strahlsteuereinheit und eine Fokussieroptik auf ein in einer Plasmazündungsposition befindliches Targetmaterial geführt wird und wobei zusätzlich zu dem Anregungs-Laserstrahl ein Vorkonditionierungs-Laserstrahl auf das Targetmaterial vor dem Erreichen der Plasmazündungsposition geführt wird, mit
• einem ersten Strahlanalysesystem (8) zur Analyse wenigstens eines aus dem Anregungs-Laserstrahl vor Reflexion an dem Targetmaterial ausgekoppelten ersten Messstrahls; und
• einem zweiten Strahlanalysesystem (9) zur Analyse wenigstens eines aus dem Anregungs-Laserstrahl nach Reflexion an dem Targetmaterial ausgekoppelten zweiten Messstrahls;
• wobei sowohl das erste Strahlanalysesystem (8) als auch das zweite Strahlanalysesystem (9) jeweils wenigstens eine Wellenfrontsensorik aufweisen;
• wobei das erste Strahlanalysesystem (8) und das zweite Strahlanalysesystem (8) ferner zur Analyse des Vorkonditionierungs-Laserstrahls ausgelegt sind, wobei die Wellenfrontsensorik des ersten Strahlanalysesystems (8) und die Wellenfrontsensorik des zweiten Strahlanalysesystems (9) jeweils eine Strahlreplikationseinheit (10) mit nachgeschalteten Wellenlängenfiltern zur Separierung des Anregungs-Laserstrahls und des Vorkonditionierungs-Laserstrahls voneinander aufweisen.

2. Metrologiesystem nach Anspruch 1, **dadurch gekennzeichnet, dass** die Wellenfrontsensorik des ersten Strahlanalysesystems und die Wellenfrontsensorik des zweiten Strahlanalysesystems jeweils einen einzigen Detektor (15) zur Erfassung sowohl des Anregungs-Laserstrahls als auch des Vorkonditionierungs-Laserstrahls aufweisen.

3. Metrologiesystem nach Anspruch 1 oder 2, **dadurch gekennzeichnet, dass** die Wellenfrontsensorik des ersten Strahlanalysesystems (8) und die Wellenfrontsensorik des zweiten Strahlanalysesystems (9) jeweils ein Gitter-Scherungs-Interferometer (40, 70) aufweisen.

4. Metrologiesystem nach Anspruch 3, **dadurch gekennzeichnet, dass** dieses Gitter-Scherungs-Interferometer (40, 70) jeweils eine ein erstes Beugungsgitter (44, 72) aufweisende Strahlreplikationseinheit (41, 71) und ein als Schergitter wirkendes zweites Beugungsgitter (47, 77) aufweist.

5. Metrologiesystem nach Anspruch 4, **dadurch gekennzeichnet, dass** das zweite Beugungsgitter (47, 77) zur Erzeugung von Scher-Interferogrammen in zueinander senkrechten Richtungen auf einem nachfolgenden Detektor ausgebildet ist.

6. Metrologiesystem nach Anspruch 4 oder 5, **dadurch gekennzeichnet, dass** das zweite Beugungsgitter (47, 77) ferner einen transparenten Bereich (47c, 77c) zur Erzeugung eines Nahfeldbildes auf einem nachfolgenden Detektor aufweist.

7. Metrologiesystem nach einem der Ansprüche 3 bis 6, **dadurch gekennzeichnet, dass** das Gitter-Scherungs-Interferometer (40) ein Fernfeld-Gitter-Scherungs-Interferometer ist.

8. Metrologiesystem nach einem der Ansprüche 3 bis 6, **dadurch gekennzeichnet, dass** das Gitter-Scherungs-Interferometer (70) ein Nahfeld-Gitter-Scherungs-Interferometer ist.

9. Metrologiesystem nach einem der vorhergehenden Ansprüche, **dadurch gekennzeichnet, dass** das erste Strahlanalysesystem (8) und das zweite Strahlanalysesystem (9) von gleicher Bauart sind.

10. Metrologiesystem nach einem der vorhergehenden Ansprüche, **dadurch gekennzeichnet, dass** der Anregungs-Laserstrahl eine Wellenlänge im Infrarotbereich besitzt.

11. Verfahren zur Vermessung eines Anregungs-Laserstrahls in einer EUV-Plasmaquelle in einem Metrologiesystem nach einem der vorhergehenden Ansprüche,
• wobei der Anregungs-Laserstrahl in der EUV-Plasmaquelle von einem Anregungs-Laser über eine Strahlsteuereinheit und eine Fokussieroptik auf ein in einer Plasmazündungsposition befindliches Targetmaterial geführt wird;
• wobei zusätzlich zu dem Anregungs-Laserstrahl ein Vorkonditionierungs-Laserstrahl auf das Targetmaterial vor dem Erreichen der Plasmazündungsposition geführt wird;
• wobei eine Analyse sowohl des Anregungs-Laserstrahls als auch des Vorkonditionierungs-Laserstrahls unter Verwendung eines ersten Strahlanalysesystems (8) mit einer Wellenfrontsensorik zur Wellenfrontvermessung von Anregungs-Laserstrahl und Vorkonditionierungs-Laserstrahl vor Reflexion an dem Targetmaterial und eines zweiten Strahlanalysesystems (9) mit einer Wellenfrontsensorik zur Wellenfrontvermessung von Anregungs-Laserstrahl und Vorkonditionierungs-Laserstrahl nach Reflexion an dem Targetmaterial erfolgt.

## Claims

1. Metrology system for measuring an excitation laser beam in an EUV plasma source, wherein the excitation laser beam is guided in the EUV plasma source from an excitation laser via a beam control unit and a focusing optical unit to a target material situated in a plasma ignition position and wherein, in addition to the excitation laser beam, a preconditioning laser beam is guided to the target material before the plasma ignition position is reached, comprising
• a first beam analysis system (8) for analysing at least one first measurement beam that was coupled from the excitation laser beam before a reflection on the target material; and
• a second beam analysis system (9) for analysing at least one second measurement beam that was coupled from the excitation laser beam after a reflection on the target material;
• wherein both the first beam analysis system (8) and the second beam analysis system (9) each have at least one wavefront sensor system;
• wherein the first beam analysis system (8) and the second beam analysis system (9) are further designed to analyse the preconditioning laser beam, wherein the wavefront sensor system of the first beam analysis system (8) and the wavefront sensor system of the second beam analysis system (9) each have a beam replication unit (10) with wavelength filters disposed downstream thereof for separating the excitation laser beam and the preconditioning laser beam from one another.

2. Metrology system according to Claim 1, **characterized in that** the wavefront sensor system of the first beam analysis system and the wavefront sensor system of the second beam analysis system each have a single detector (15) for capturing both the excitation laser beam and the preconditioning laser beam.

3. Metrology system according to Claim 1 or 2, **characterized in that** the wavefront sensor system of the first beam analysis system (8) and the wavefront sensor system of the second beam analysis system (9) each have a grating shearing interferometer (40, 70).

4. Metrology system according to Claim 3, **characterized in that** this grating shearing interferometer (40, 70) respectively comprises a beam replication unit (41, 71) having a first diffraction grating (44, 72) and a second diffraction grating (47, 77) acting as a shearing grating.

5. Metrology system according to Claim 4, **characterized in that** the second diffraction grating (47, 77) is embodied to generate shearing interferograms in mutually perpendicular directions on a downstream detector.

6. Metrology system according to Claim 4 or 5, **characterized in that** the second diffraction grating (47, 77) further has a transparent region (47c, 77c) for generating a near field image on a downstream detector.

7. Metrology system according to any of Claims 3 to 6, **characterized in that** the grating shearing interferometer (40) is a far field grating shearing interferometer.

8. Metrology system according to any of Claims 3 to 6, **characterized in that** the grating shearing interferometer (70) is a near field grating shearing interferometer.

9. Metrology system according to any of the preceding claims, **characterized in that** the first beam analysis system (8) and the second beam analysis system (9) are of the same design.

10. Metrology system according to any of the preceding claims, **characterized in that** the excitation laser beam has a wavelength in the infrared range.

11. Method for measuring an excitation laser beam in an EUV plasma source in a metrology system according to any of the preceding claims,
• wherein the excitation laser beam is guided in the EUV plasma source from an excitation laser via a beam control unit and a focusing optical unit to a target material situated in a plasma ignition position;
• wherein, in addition to the excitation laser beam, a preconditioning laser beam is guided to the target material before the plasma ignition position is reached;
• wherein both the excitation laser beam and the preconditioning laser beam are analysed using a first beam analysis system (8) with a wavefront sensor system for measuring the wavefront of the excitation laser beam and the preconditioning laser beam before a reflection at the target material and a second beam analysis system (9) with a wavefront sensor system for measuring the wavefront of the excitation laser beam and the preconditioning laser beam after a reflection at the target material.

## Revendications

1. Système de métrologie permettant de mesurer un faisceau laser d'excitation dans une source de plasma ultraviolet extrême (EUV), dans lequel le faisceau laser d'excitation dans la source de plasma EUV est guidé d'un laser d'excitation par l'intermédiaire d'une unité de commande de faisceau et d'une optique de focalisation sur un matériau cible se trouvant dans une position d'amorçage de plasma, et dans lequel en plus du faisceau laser d'excitation, un faisceau laser de préconditionnement est guidé sur le matériau cible avant d'atteindre la position d'amorçage de plasma, comprenant
• un premier système d'analyse de faisceau (8) pour analyser au moins un premier faisceau de mesure extrait du faisceau laser d'excitation avant réflexion sur le matériau cible ; et
• un deuxième système d'analyse de faisceau (9) pour analyser au moins un deuxième faisceau de mesure extrait du faisceau laser d'excitation après réflexion sur le matériau cible ;
• dans lequel à la fois le premier système d'analyse de faisceau (8) et le deuxième système d'analyse de faisceau (9) présentent respectivement au moins un système de capteurs de front d'onde ;
• dans lequel le premier système d'analyse de faisceau (8) et le deuxième système d'analyse de faisceau (8) sont en outre conçus pour analyser le faisceau laser de préconditionnement, le système de capteurs de front d'onde du premier système d'analyse de faisceau (8) et le système de capteurs de front d'onde du deuxième système d'analyse de faisceau (9) présentant respectivement une unité de réplication de faisceau (10) avec des filtres de longueur d'onde placés en aval pour séparer le faisceau laser d'excitation et le faisceau laser de préconditionnement l'un de l'autre.

2. Système de métrologie selon la revendication 1, **caractérisé en ce que** le système de capteurs de front d'onde du premier système d'analyse de faisceau et le système de capteurs de front d'onde du deuxième système d'analyse de faisceau présentent respectivement un seul détecteur (15) pour détecter à la fois le faisceau laser d'excitation et le faisceau laser de préconditionnement.

3. Système de métrologie selon la revendication 1 ou 2, **caractérisé en ce que** le système de capteurs de front d'onde du premier système d'analyse de faisceau (8) et le système de capteurs de front d'onde du deuxième système d'analyse de faisceau (9) présentent respectivement un interféromètre à cisaillement de réseau (40, 70).

4. Système de métrologie selon la revendication 3, **caractérisé en ce que** cet interféromètre à cisaillement de réseau (40, 70) présente respectivement une unité de réplication de faisceau (41, 71) présentant un premier réseau de diffraction (44, 72) et un deuxième réseau de diffraction (47, 77) agissant comme un réseau de cisaillement.

5. Système de métrologie selon la revendication 4, **caractérisé en ce que** le deuxième réseau de diffraction (47, 77) est réalisé pour générer des interférogrammes de cisaillement dans des directions mutuellement perpendiculaires sur un détecteur suivant.

6. Système de métrologie selon la revendication 4 ou 5, **caractérisé en ce que** le deuxième réseau de diffraction (47, 77) présente en outre une zone transparente (47c, 77c) pour générer une image en champ proche sur un détecteur suivant.

7. Système de métrologie selon l'une quelconque des revendications 3 à 6, **caractérisé en ce que** l'interféromètre à cisaillement de réseau (40) est un interféromètre à cisaillement de réseau en champ lointain.

8. Système de métrologie selon l'une quelconque des revendications 3 à 6, **caractérisé en ce que** l'interféromètre à cisaillement de réseau (70) est un interféromètre à cisaillement de réseau en champ proche.

9. Système de métrologie selon l'une quelconque des revendications précédentes, **caractérisé en ce que** le premier système d'analyse de faisceau (8) et le deuxième système d'analyse de faisceau (9) sont du même type.

10. Système de métrologie selon l'une quelconque des revendications précédentes, **caractérisé en ce que** le faisceau laser d'excitation possède une longueur d'onde dans le domaine des infrarouges.

11. Procédé permettant de mesurer un faisceau laser d'excitation dans une source de plasma EUV dans un système de métrologie selon l'une quelconque des revendications précédentes,
• dans lequel le faisceau laser d'excitation est guidé dans la source de plasma EUV d'un laser d'excitation par l'intermédiaire d'une unité de commande de faisceau et d'une optique de focalisation sur un matériau cible se trouvant dans une position d'amorçage de plasma ;
• dans lequel en plus du faisceau laser d'excitation, un faisceau laser de préconditionnement est guidé sur le matériau cible avant d'atteindre la position d'amorçage de plasma ;
• dans lequel une analyse à la fois du faisceau laser d'excitation et du faisceau laser de préconditionnement est effectuée en utilisant un premier système d'analyse de faisceau (8) avec un système de capteurs de front d'onde pour mesurer le front d'onde du faisceau laser d'excitation et du faisceau laser de préconditionnement avant réflexion sur le matériau cible et un deuxième système d'analyse de faisceau (9) avec un système de capteurs de front d'onde pour mesurer le front d'onde du faisceau laser d'excitation et du faisceau laser de préconditionnement après réflexion sur le matériau cible.
